(19) Europäisches Patentamt
European Patent Office
Office européen des brevets

(11) **EP 2 963 402 B1**

(12) **EUROPEAN PATENT SPECIFICATION**

(45) Date of publication and mention
of the grant of the patent:
**08.05.2019 Bulletin 2019/19**

(51) Int Cl.:
*G01K 7/42* (2006.01)          *G01D 3/036* (2006.01)
*G01K 1/20* (2006.01)          *H04M 1/21* (2006.01)
*H04M 1/725* (2006.01)

(21) Application number: **14175230.3**

(22) Date of filing: **01.07.2014**

(54) **Method of operating a mobile device, computer program product and mobile device**

Verfahren zum Betreiben einer mobilen Vorrichtung, Computerprogrammprodukt und mobile Vorrichtung

Procédé de fonctionnement d'un dispositif mobile, produit de programme informatique et dispositif mobile

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.01.2016 Bulletin 2016/01**

(73) Proprietor: **NXP B.V.
5656 AG Eindhoven (NL)**

(72) Inventors:
• **Ng, Pei Sin
  5656 AG Eindhoven (NL)**
• **Huang, Jinquan
  5656 AG Eindhoven (NL)**
• **Phan Le, Kim
  5656 AG Eindhoven (NL)**
• **Lim, Cheng Leong
  5656 AG Eindhoven (NL)**

(74) Representative: **Krott, Michel et al
NXP Semiconductors
Intellectual Property & Licensing
High Tech Campus 60
5656 AG Eindhoven (NL)**

(56) References cited:
EP-A1- 1 301 014          EP-A1- 2 682 715
EP-A1- 2 793 450          CN-U- 202 231 764
US-A1- 2011 119 018       US-A1- 2011 273 378
US-A1- 2013 099 008

**Description**

FIELD

The present disclosure relates to a method of operating a mobile device. Furthermore, the present disclosure relates to a corresponding computer program product and to a corresponding mobile device.

BACKGROUND

Modern mobile devices, such as smart phones, often contain temperature sensors which are used to measure the ambient temperature around said devices. However, the temperature sensors within such mobile devices should ideally be placed as close as possible to the medium whose temperature should be measured, i.e. the ambient air, in order to yield reliable measurement results. However, temperature sensors can only be housed within the body of a mobile phone, for cosmetic and functional reasons. Unfortunately, temperature sensors placed within a casing or enclosure exhibit a relatively large response time. That is to say, it takes a relatively large amount of time, for example 15 to 40 minutes, before an embedded temperature sensor accurately measures the ambient air temperature. It may be desirable to reduce this response time. Furthermore, it may be desirable to provide, to a user of a mobile device, an indication of an environmental condition around the mobile device.

US 2011/0119018 A1 describes an arrangement for estimation of ambient temperature of an electronic device is disclosed. The electronic device comprises a power consuming unit, which is subject to self heating when in use. The arrangement comprises at least a first and a second temperature sensor and a processor. The sensors are adapted to produce first and second temperature measurements as functions of time respectively, and a temperature transport time to the first sensor from the power consuming unit differs from a temperature transport time to the second sensor from the power consuming unit. The processor is adapted to determine an ambient temperature estimate based at least on the first and second temperature measurements as functions of time. A corresponding method and computer program product are also disclosed.

EP 2 793 450 A1 describes a portable electronic device with one or more integrated ambient sensors, such as temperature or humidity sensors, for measuring an ambient parameter, a display for displaying the parameter or related information and shared by other elements of the device, and a system receiving input relating to internal or external states of the device and generating in response to the input an accuracy measure of the ambient parameter measurement.

EP 1 301 014 A1 describes a mobile phone having various components, including a housing and a battery, and an accelerated ambient temperature measurement module for measuring the ambient temperature of the environment surrounding the user equipment based on the temperature of at least one point in the mobile phone. The at least one point may include one or more points in relation to one or more of the various components. The accelerated ambient temperature measurement module measures the accelerated ambient temperature based on the temperature of the housing or the battery. The mobile phone has a resistor arranged in relation to either the housing or battery, and the accelerated ambient temperature measurement module determines the accelerated ambient temperature based on certain equations.

SUMMARY

There is disclosed a method of operating a mobile device as defined in claim 1.

In one or more further illustrative embodiments, the processing unit calculates the ambient temperature in dependence on a further value that is indicative of a thermal influence of a casing of the mobile device.

In one or more further illustrative embodiments, the processing unit calculates the ambient temperature further in dependence on a ratio which is indicative of respective contributions of thermal influences of different mobile device components on the temperature sensor.

Furthermore, there is disclosed a computer program product, as defined in claim 4, comprising executable instructions which, when being executed by a processing unit, carry out or control a method of the kind set forth.

Furthermore, there is disclosed a mobile device as defined in claim 5.

In one or more further illustrative embodiments, the processing unit is arranged to calculate the ambient temperature in dependence on a further value that is indicative of a thermal influence of a casing of the mobile device.

In one or more further illustrative embodiments, the processing unit is arranged to calculate the ambient temperature further in dependence on a ratio which is indicative of respective contributions of thermal influences of different mobile device components on the temperature sensor.

DESCRIPTION OF DRAWINGS

Embodiments will be described in more detail with reference to the appended drawings, in which:

Fig. 1A shows an illustrative embodiment of a method of operating a mobile device;
Fig. 1B shows an illustrative embodiment of a corresponding mobile device;
Fig. 2 illustrates the effect of applying a method of operating a mobile device of the kind set forth;
Fig. 3 illustrates the effect of varying environmental conditions on temperature change.

DESCRIPTION OF EMBODIMENTS

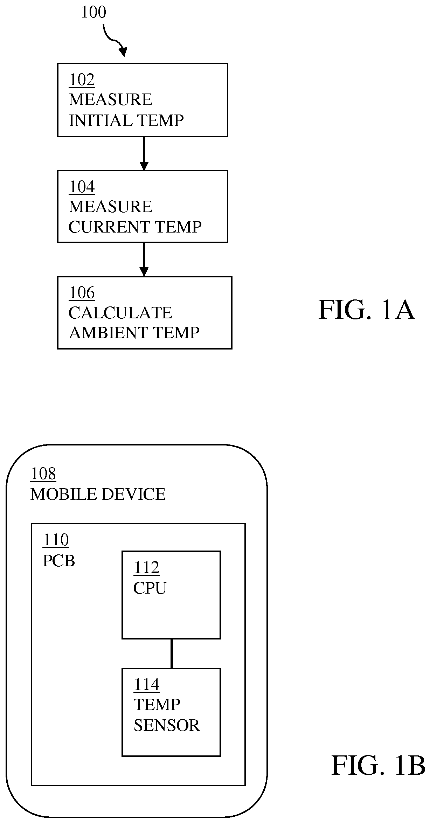

**Fig. 1A** shows an illustrative embodiment of a method 100 of operating a mobile device in accordance with the present disclosure. An initial temperature value is measured, at 102, by a temperature sensor comprised in the mobile device, at a first time instant. Then, at 104, a further temperature value is measured, at a second time instant. Next, an ambient temperature around the mobile device is calculated, at 106, in dependence on the initial temperature value, the current temperature value and at least one further value which is indicative of a thermal influence of a mobile device component on the temperature sensor. For example, as explained below, the thermal influence of the sensor package, the printed circuit board on which the sensor package is mounted, and the casing of the mobile device may be taken into account. A computer program may carry out or control the steps of the method. In this way, the ambient temperature around the mobile device may be approximated relatively fast.

**Fig. IB** shows an illustrative embodiment of a corresponding mobile device 108. The mobile device 108 may comprise a printed circuit board 110, for example, on which a central processing unit 112 may be provided, as well as a temperature sensor 114 connected to said central processing unit 112. Typically, the temperature sensor is a die which is embedded in a sensor package. In operation, the central processing unit 112 may execute a computer program in accordance with the present disclosure. The computer program may have been stored in a memory unit which may be embedded in, or external to, the central processing unit 112. The temperature sensor 114 may perform repeated temperature measurements. The central processing unit 112 may communicate with the temperature sensor 114 in order to retrieve measured temperature values and store them in the memory unit, for example, which may be used as a working memory for performing calculations.

The calculation of the ambient temperature may be based on Newton's law of cooling. According to Newton's law of cooling, the rate of change of temperature of an object is proportional to the difference between the ambient temperature and its own temperature. This may be described as an equation, where $T_A$ is the ambient temperature, T is the current temperature of the object, and $k$ is a constant:

$$\frac{dT}{dt} = -k(T_A - T)$$

Expanding on the equation gives:

$$\frac{dT}{dt} = -k(T_A - T)$$

$$\int \frac{1}{T_A - T} dT = \int (-k)\, dt$$

$$\ln(T_A - T) = -kt + \ln(c)$$

$$\frac{T_A - T}{c} = e^{-kt}$$

$$T_A - T = ce^{-kt}$$

Applying the initial condition for $(0, T_0)$, i.e. the initial temperature $T_0$ of the object at time instant 0, gives:

$$c = T_A - T_0$$

$$T = T_A - (T_A - T_0)e^{-kt}$$

Thus, from Newton's law of cooling, a formula is derived which defines the current temperature of an object (T) as a function of the ambient temperature ($T_A$), the initial temperature of the object (To) and time. In the case of a semiconductor-based temperature sensor, both the sensor package (in which the sensor die is embedded) and the printed circuit board (PCB) on which the sensor package is mounted may influence the temperature of the sensor die. Both objects, i.e. the sensor package and the PCB on which it is mounted, undergo temperature changes due to changes in the temperature of the ambient air. Through experiments, it was found that most thermal response curves can be described in the form $Tsensor \approx \alpha (Tpackage) + \beta (Tpcb)$, wherein $Tsensor$ is the current temperature of the sensor die (i.e. the current temperature value measured by the sensor), $Tpackage$ is the current temperature of the sensor package, and $Tpcb$ is the current temperature of the printed circuit board on which the sensor package is mounted. Thus, the last equation above can be rewritten as follows:

$$Tsensor = \alpha[T_A - (T_A - T_0)e^{-k_1 t}] + \beta[T_A - (T_A - T_0)e^{-k_2 t}]$$

It is noted that the initial temperature of the sensor package is assumed to be the same as the initial temperature of the PCB and the initial temperature of the sensor die. That is to say, it is assumed that, at time instant 0, the sensor die, the sensor package and the PCB have temperature value $T_0$. Ideally, the initial condition is a condition wherein the temperature is at rest and preferably on the verge of transition. In this state, the temperatures of the die, the sensor package and the PCB are approximately the same. Any known method for detecting an initial condition may be used in combination with the presently disclosed method. Such methods include, without limitation, regular sampling of temperature changes, temperature trending detection techniques and edge detection techniques. Finally, rearranging the terms, the ambient temperature $T_A$ can be calculated as follows:

$$T_A = \frac{Tsensor - T_0 e^{-k_2 t} + \alpha T_0 (e^{-k_2 t} - e^{-k_1 t})}{1 - e^{-k_2 t} + \alpha(e^{-k_2 t} - e^{-k_1 t})}$$

wherein $k_1$ is a constant indicative of the thermodynamic properties of the sensor package, $k_2$ is a constant indicative of the thermodynamic properties of the next significant influence, i.e. the printed circuit board, and $\alpha = 1 - \beta$. The constant $\alpha$ is a ratio which reflects the respective contributions of the influence of the sensor package and the influence of the printed circuit board on the temperature of the sensor die ($T_{sensor}$).

The inventors have found by experiment that this method of approximating the ambient temperature significantly reduces the response time. The coefficients $k_1$, $k_2$ and $\alpha$ may be sufficient to describe the thermal characteristics of the temperature sensor inside the casing of the mobile device. In order to calibrate the method for use in, for example, a mobile phone, the nominal $k_1$, $k_2$ and $\alpha$ coefficients may have to be established via experiments. This may be done as follows. First, temperature values may be measured and recorded in a log file. Then, the rate of change may be determined and curve-fitted to find the nominal values of $k_1$, $k_2$ and $\alpha$ for the mobile phone. Having established the nominal values of $k_1$ and $k_2$, some degree of freedom may be added to $k_2$. The nominal value of $k_2$ may be adjusted by estimation - for example by estimating it as a percentage of the nominal value of $k_2$ - or by further experimentation, for example by subjecting the mobile phone to extreme thermal conductivities.

It is noted that further influences on the temperature of the sensor die ($Tsensor$) may also be taken into account. For example, the skilled person will appreciate that it is possible, and that it may sometimes be desirable, to take the influence of the casing of the mobile device on the temperature of the sensor die into account, in addition to the influence of the sensor package and the influence of the printed circuit board. In that case, the current temperature of the sensor die ($Tsensor$) may be expressed by $Tsensor \approx \alpha(Tpackage) + \beta(Tpcb) + \gamma(Tcasing)$, and the above-described formula for calculating the ambient temperature ($T_A$) may be changed accordingly.

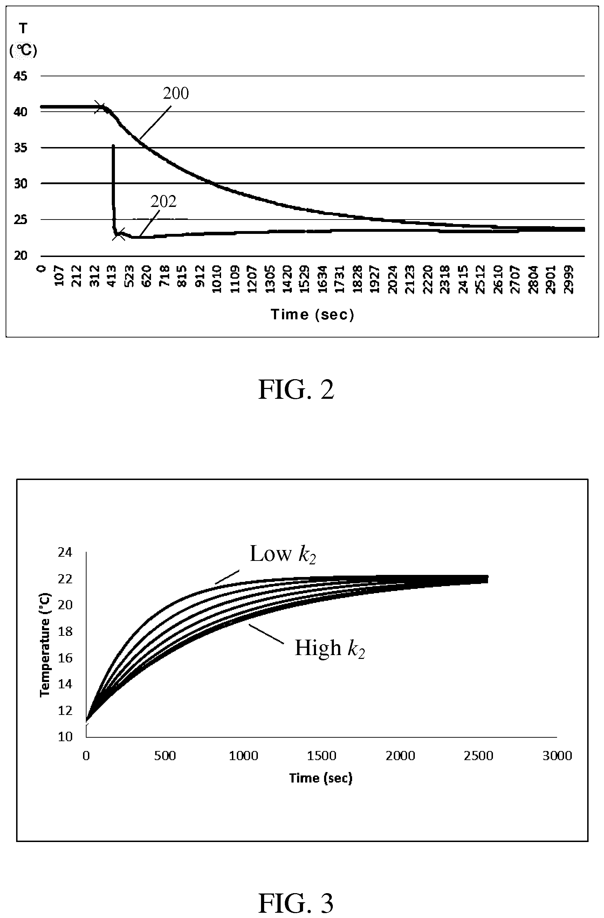

**Fig. 2** illustrates the effect of applying a method of operating a mobile device of the kind set forth. In this example, the ambient temperature suddenly drops from above 40 °C to below 25 °C. The upper line 200 shows the 'raw' temperature values measured by the temperature sensor. The lower line 202 shows the estimated ambient temperature, i.e. the calculated ambient temperature in accordance with the presently disclosed method. The figure shows that the estimation result is available approximately 2500 seconds earlier than the raw temperature value that corresponds to the new ambient temperature.

**Fig. 3** illustrates the effect of varying environmental conditions on temperature change. An environmental condition such as wind (higher air convection) is best represented by a low value of constant $k_2$ and leads to shorter response time, i.e. it takes a relatively small amount of time before the raw temperature values measured by the temperature sensor match the actual new ambient temperature. When the object is close to a metallic surface (higher heat conduction), the constant $k_2$ may have a medium value, and the response time is moderate. When the object is, for instance, wrapped in a bag, which inhibits the convection, the constant $k_2$ may have a relatively high value, and the response time is long.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

LIST OF REFERENCE SIGNS

| | |
|---|---|
| 100 | method of operating mobile device |
| 102 | measure initial temperature value |
| 104 | measure current temperature value |
| 106 | calculate ambient temperature |
| 108 | mobile device |
| 110 | printed circuit board |
| 112 | central processing unit |
| 114 | temperature sensor |
| 200 | measured temperature values |
| 202 | calculated ambient temperature |

**Claims**

1. A method of operating a mobile device (108), wherein:

- a temperature sensor (114) comprised in said mobile device (108) measures (102), at a first time instant, an initial temperature value, $T_0$ ;
- the temperature sensor (114) measures (104), at a second time instant, t, a current temperature value, $T_{sensor}$;
- a processing unit (112) comprised in said mobile device (108) calculates an ambient temperature, $T_A$, around the mobile device (108),

**characterized in that** the ambient temperature, $T_A$, is calculated in dependence on the initial temperature value, $T_0$, the current temperature value, $T_{sensor}$, a first constant ratio, $\alpha$, reflecting the contributions of a thermal influence of a sensor package which includes the temperature sensor (114) on the current temperature value, $T_{sensor}$, a second constant ratio, $\beta$, wherein $\alpha = 1 - \beta$, reflecting the contributions of a thermal influence of a printed circuit board (110) on which the sensor package is mounted on the current temperature value, $T_{sensor}$, a first constant, $k_1$, indicative of the thermodynamic properties of the sensor package, a second constant, $k_2$, indicative of the thermodynamic properties of the printed circuit board (110), by deriving the ambient temperature, $T_A$, from the following equation:

$$Tsensor = \alpha[T_A - (T_A - T_0)e^{-k_1 t}] + \beta[T_A - (T_A - T_0)e^{-k_2 t}]$$

2. A method as claimed in the preceding claim, wherein the processing unit (112) calculates the ambient temperature, $T_A$, in dependence on a third constant ratio, $\gamma$, reflecting the contributions of a thermal influence of a casing of the mobile device (108) on the current temperature value $T_{sensor}$.

3. A method as claimed in any preceding claim, wherein the processing unit (112) calculates the ambient temperature further in dependence on a ratio which is indicative of respective contributions of thermal influences of different mobile device components on the temperature sensor (114).

4. A computer program product comprising executable instructions which, when being executed by a processing unit (112), carry out or control a method as claimed in any preceding claim.

5. A mobile device (108) comprising:

- a temperature sensor (114) being arranged to measure, at a first time instant, an initial temperature value, $T_0$, and, at a second time instant, t, a current temperature value, $T_{sensor}$ ;
- a processing unit (112) being arranged to calculate an ambient temperature, $T_A$, around the mobile device (108),

**characterized in that** the processing unit (112) calculates the ambient temperature, $T_A$, in dependence on the initial temperature value, $T_0$, the current temperature value, $T_{sensor}$, a first constant ratio, $\alpha$, reflecting the contributions of a thermal influence of a sensor package which includes the temperature sensor (114) on the current temperature value, $T_{sensor}$, a second constant ratio, $\beta$, wherein $\alpha = 1 - \beta$, reflecting the contributions of a thermal influence of a printed circuit board (110) on which the sensor package is mounted on the current temperature value, $T_{sensor}$, a first constant, $k_1$, indicative of the thermodynamic properties of the sensor package, a second constant, $k_2$, indicative of the thermodynamic properties of the printed circuit board (110), by deriving the ambient temperature, $T_A$, from the following equation:

$$Tsensor = \alpha[T_A - (T_A - T_0)e^{-k_1 t}] + \beta[T_A - (T_A - T_0)e^{-k_2 t}]$$

6. A mobile device as claimed in claim 5, wherein the processing unit (112) is arranged to calculate the ambient temperature, $T_A$, in dependence on a third constant ratio, $\gamma$, reflecting the contributions of a thermal influence of a casing of the mobile device (108) on the current temperature value, $T_{sensor}$.

7. A mobile device as claimed in claim 5 or 6, wherein the processing unit (112) is arranged to calculate the ambient temperature further in dependence on a ratio which is indicative of respective contributions of thermal influences of different mobile device components on the temperature sensor (114).

**Patentansprüche**

1. Ein Verfahren zum Betreiben einer mobilen Vorrichtung (108), wobei:

- ein Temperatursensor (114), der in der mobilen Vorrichtung (108) aufgewiesen ist, zu einem ersten Zeitpunkt

einen anfänglichen Temperaturwert, $T_0$, misst (102);

- der Temperatursensor (114) zu einem zweiten Zeitpunkt, t, einen gegenwärtigen Temperaturwert, $T_{sensor}$, misst (104);

- eine Verarbeitungseinheit (112), die in der mobilen Vorrichtung (108) aufgewiesen ist, eine Umgebungstemperatur, $T_A$, um die mobile Vorrichtung (108) herum berechnet,

dadurch charakterisiert, dass die Umgebungstemperatur, $T_A$, berechnet wird in Abhängigkeit von dem anfänglichen Temperaturwert, $T_0$, von dem gegenwärtigen Temperaturwert, $T_{sensor}$, von einem ersten konstanten Verhältnis, $\alpha$, das die Beiträge widerspiegelt eines thermischen Einflusses einer Sensorpackung, die den Temperatursensor (114) beinhaltet, auf den gegenwärtigen Temperaturwert, $T_{sensor}$, von einem zweiten konstanten Verhältnis, $\beta$, wobei $\alpha$ = 1 - $\beta$, das die Beiträge widerspiegelt eines thermischen Einflusses einer gedruckten Leiterplatte (110), auf welcher die Sensorpackung montiert ist, auf den gegenwärtigen Temperaturwert, $T_{sensor}$, von einer ersten Konstante, $k_1$, die indikativ ist für die thermodynamischen Eigenschaften der Sensorpackung, von einer zweiten Konstante, $k_2$, die indikativ ist für die thermodynamischen Eigenschaften der gedruckten Leiterplatte (110), indem die Umgebungstemperatur, $T_A$, aus der folgenden Gleichung abgeleitet wird:

$$Tsensor = \alpha[T_A - (T_A - T_0)e^{-k_1 t}] + \beta[T_A - (T_A - T_0)e^{-k_2 t}]$$

2. Ein Verfahren gemäß dem vorhergehenden Anspruch, wobei die Verarbeitungseinheit (112) die Umgebungstemperatur, $T_A$, in Abhängigkeit von einem dritten konstanten Verhältnis, $\gamma$, berechnet, das die Beiträge eines thermischen Einflusses eines Gehäuses der mobilen Vorrichtung (108) auf den gegenwärtigen Temperaturwert, $T_{sensor}$, widerspiegelt.

3. Ein Verfahren gemäß einem vorhergehenden Anspruch, wobei die Verarbeitungseinheit (112) die Umgebungstemperatur ferner in Abhängigkeit von einem Verhältnis berechnet, das indikativ ist für die jeweiligen Beiträge von thermischen Einflüssen verschiedener Mobile-Vorrichtung Komponenten auf den Temperatursensor (114).

4. Ein Computerprogramm Produkt, aufweisend ausführbare Anweisungen, die, wenn sie von einer Verarbeitungseinheit (112) ausgeführt werden, ein Verfahren durchführen oder steuern, wie es in einem vorhergehenden Anspruch beansprucht wird.

5. Eine mobile Vorrichtung (108), aufweisend:

- einen Temperatursensor (114), der eingerichtet ist, zu einem ersten Zeitpunkt einen anfänglichen Temperaturwert, $T_0$, und zu einem zweiten Zeitpunkt, t, einen gegenwärtigen Temperaturwert, $T_{sensor}$, zu messen;
- eine Verarbeitungseinheit (112), die eingerichtet ist, eine Umgebungstemperatur, $T_A$, um die mobile Vorrichtung (108) herum zu berechnen,

dadurch charakterisiert, dass die Verarbeitungseinheit (112) die Umgebungstemperatur, $T_A$, berechnet in Abhängigkeit von dem anfänglichen Temperaturwert, $T_0$, von dem gegenwärtigen Temperaturwert, $T_{sensor}$, von einem ersten konstanten Verhältnis, $\alpha$, das die Beiträge widerspiegelt eines thermischen Einflusses einer Sensorpackung, die den Temperatursensor (114) beinhaltet, auf den gegenwärtigen Temperaturwert, $T_{sensor}$, von einem zweiten konstanten Verhältnis, $\beta$, wobei $\alpha$ = 1 - $\beta$, das die Beiträge widerspiegelt eines thermischen Einflusses einer gedruckten Leiterplatte (110), auf welcher die Sensorpackung montiert ist, auf den gegenwärtigen Temperaturwert, $T_{sensor}$, von einer ersten Konstante, $k_1$, die indikativ ist für die thermodynamischen Eigenschaften der Sensorpackung, von einer zweiten Konstante, $k_2$, die indikativ ist für die thermodynamischen Eigenschaften der gedruckten Leiterplatte (110), indem die Umgebungstemperatur, $T_A$, aus der folgenden Gleichung abgeleitet wird:

$$Tsensor = \alpha[T_A - (T_A - T_0)e^{-k_1 t}] + \beta[T_A - (T_A - T_0)e^{-k_2 t}]$$

6. Eine mobile Vorrichtung gemäß Anspruch 5, wobei die Verarbeitungseinheit (112) eingerichtet ist, die Umgebungstemperatur, $T_A$, in Abhängigkeit von einem dritten konstanten Verhältnis, $\gamma$, zu berechnen, das die Beiträge eines thermischen Einflusses eines Gehäuses der mobilen Vorrichtung (108) auf den gegenwärtigen Temperaturwert, $T_{sensor}$, widerspiegelt.

**7.** Eine mobile Vorrichtung gemäß Anspruch 5 oder 6, wobei die Verarbeitungseinheit (112) eingerichtet ist, die Umgebungstemperatur ferner in Abhängigkeit von einem Verhältnis zu berechnen, das indikativ ist für die jeweiligen Beiträge von thermischen Einflüssen verschiedener Mobile-Vorrichtung Komponenten auf den Temperatursensor (114).

## Revendications

**1.** Procédé d'exploitation d'un dispositif mobile (108), dans lequel :

- un capteur de température (114) compris dans ledit dispositif mobile (108) mesure (102), à un premier instant, une valeur de température initiale, $T_0$ ;
- le capteur de température (114) mesure (104), à un second instant, une valeur de température actuelle, $T_{sensor}$ ;
- une unité de traitement (112) comprise dans ledit dispositif mobile (108) calcule une température ambiante, $T_A$, autour du dispositif mobile (108),

**caractérisé en ce que** la température ambiante, $T_A$, est calculée en fonction de la valeur de température initiale, $T_0$, de la valeur de température actuelle, $T_{sensor}$, d'un premier rapport constant, $\alpha$, reflétant les contributions d'une influence thermique d'un boîtier de capteur comprenant le capteur de température (114) sur la valeur de température actuelle $T_{sensor}$, d'un second rapport constant, $\beta$, tel que $\alpha = 1 - \beta$ reflétant les contributions d'une influence thermique d'une carte de circuit imprimé (110) sur laquelle le boîtier de capteur est monté, sur la valeur de température actuelle, $T_{sensor}$, d'une première constante $k_1$, indicatrice des propriétés thermodynamiques du boîtier de capteur, d'une seconde constante $k_2$, indicatrice des propriétés thermodynamiques de la carte de circuit imprimé (110), en déduisant la température ambiante, $T_A$, à partir de l'équation suivante :

$$ T{sensor} = \alpha[T_A - (T_A - T_0)e^{-k_1 t}] + \beta[T_A - (T_A - T_0)e^{-k_2 t}] $$

**2.** Procédé selon la revendication précédente, dans lequel l'unité de traitement (112) calcule la température ambiante, $T_A$, en fonction d'un troisième rapport constant, $\gamma$, reflétant les contributions de l'influence thermique d'un boîtier du dispositif mobile (108) sur la valeur de température actuelle $T_{sensor}$.

**3.** Procédé selon l'une quelconque des revendications précédentes, dans lequel l'unité de traitement (112) calcule en outre la température ambiante en fonction d'un rapport qui indique les contributions respectives des influences thermiques de différents composants du dispositif mobile sur le capteur de température (114).

**4.** Progiciel informatique comprenant des instructions exécutables qui, lorsqu'elles sont exécutées par une unité de traitement (112), mettent en oeuvre ou contrôlent un procédé selon l'une quelconque des revendications précédentes.

**5.** Dispositif mobile (108) comprenant :

- un capteur de température (114) agencé pour mesurer, à un premier instant, une valeur de température initiale, $T_0$, et, à un second instant, t, la valeur de température actuelle, $T_{sensor}$ ;
- une unité de traitement (112) agencée pour calculer une température ambiante, $T_A$, autour du dipositif mobile (108),

**caractérisé en ce que** l'unité de traitement (112) calcule la température ambiante, $T_A$, en fonction de la valeur de température initiale, $T_0$, de la valeur de température actuelle, $T_{sensor}$, d'un premier rapport constant, $\alpha$, reflétant les contributions d'une influence thermique d'un boîtier de capteur comprenant le capteur de température (114) sur la valeur de température actuelle, $T_{sensor}$, d'un second rapport constant, $\beta$, tel que $\alpha = 1 - \beta$ reflétant les contributions d'une influence thermique d'une carte de circuit imprimé (110) sur laquelle le boîtier de capteur est monté, sur la valeur de température actuelle, $T_{sensor}$, d'une première constante $k_1$, indicatrice des propriétés thermodynamiques du boîtier de capteur, d'une seconde constante $k_2$, indicatrice des propriétés thermodynamiques de la carte de circuit imprimé (110), en déduisant la température ambiante, $T_A$, à partir de l'équation suivante :

$$Tsensor = \alpha[T_A - (T_A - T_0)e^{-k_1 t}] + \beta[T_A - (T_A - T_0)e^{-k_2 t}]$$

**6.** Dispositif mobile selon la revendication 5, dans lequel l'unité de traitement (112) est agencée pour calculer la température ambiante, $T_A$, en fonction d'un troisième rapport constant, $\gamma$, reflétant les contributions de l'influence thermique d'un boîtier du dispositif mobile (108) sur la valeur de température actuelle $T_{sensor}$.

**7.** Dispositif mobile selon les revendications 5 ou 6, dans lequel l'unité de traitement (112) est agencée pour calculer en outre la température ambiante en fonction d'un rapport qui indique les contributions respectives des influences thermiques de différents composants du dispositif mobile sur le capteur de température (114).

100

102
MEASURE
INITIAL TEMP

104
MEASURE
CURRENT TEMP

106
CALCULATE
AMBIENT TEMP

FIG. 1A

108
MOBILE DEVICE

110
PCB

112
CPU

114
TEMP
SENSOR

FIG. 1B

FIG. 2

FIG. 3

**EP 2 963 402 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110119018 A1
- EP 2793450 A1
- EP 1301014 A1